# EUROPEAN PATENT SPECIFICATION

(11) **EP 2 573 738 B1**
(45) Date of publication and mention of the grant of the patent: **11.03.2015**
(21) Application number: 12182749.7
(22) Date of filing: 03.09.2012
(51) Int. Cl.: G07C 9/00, B60R 16/00

(54) **System and method to operate an extended range keyless entry system to recognize a keyless entry transmitter.**
System und Verfahren für den Betrieb eines schlüssellosen Zutrittssystems mit größerer Reichweite zur Erkennung des schlüssellosen Zutrittssenders
Système et procédé pour faire fonctionner un système d'entrée sans clé à portée étendue pour reconnaître un transmetteur d'entrée sans clé

(30) Priority: 21.09.2011 US 201113238378
(43) Date of publication of application: 27.03.2013
(73) Proprietor: Delphi Technologies, Inc., Troy, MI 48007 (US)
(72) Inventor: Tieman, Craig A., Westfield, IN Indiana 46074 (US)
(74) Representative: Allain, Michel Jean Camille

(56) References cited:
- EP-A2- 1 000 826
- EP-A2- 2 048 627
- EP-A2- 2 048 629
- EP-A2- 2 113 886
- WO-A2-2004/077729
- WO-A2-2006/081367
- DE-A1- 19 624 817
- US-A1- 2004 239 483
- US-A1- 2011 071 734
- US-B1- 6 853 853

## Description

### TECHNICAL FIELD OF INVENTION

This disclosure generally relates to an extended range vehicle remote keyless entry (RKE) system, and more particularly relates to a way to install an in-vehicle communication module that communicates with a cellular network and a keyless entry transmitter.

### BACKGROUND OF INVENTION

Many vehicles are equipped with remote keyless entry (RKE) systems that operate certain aspects of the vehicle in response to a signal from a key-fob, such as locking or unlocking the vehicle doors, or starting the vehicle US 6853853 B1 discloses a remote control system for operating selected functions of a vehicle, and more particularly to a remote control system having a transmitter mounted on a vehicle having long range capability. EP 1000826 discloses a backup system for enabling access to a vehicle in the event that standard access devices are unvailable. WO2004/077729 discloses a trainable radio frequency transceiver for a vehicle that transmits a control signal to a remotely controlled device. United States Patent Application Serial Number 13/118,844, entitled REMOTE KEYLESS ENTRY RELAY MODULE AND SYSTEM, filed May 31, 2011, and having the same first named inventor and assigned to the same assignee as this application, describes a system that extends the range of a RKE system by arranging for a mobile communication device such as a cellular phone to communicate with an in-vehicle communication module in a vehicle via a cellular phone network. The module includes a keyless entry transmitter so the module can transmit RKE signals and thereby mimic a RKE key-fob.

When the module with a new (i.e. - previously unrecognized) keyless entry transmitter is first installed in a vehicle, the vehicle's keyless entry receiver must be placed into a "learn" mode to enable the keyless entry receiver to recognize the new keyless entry transmitter in the module. On many vehicles, this process is performed with special test equipment connected to a diagnostic bus in the vehicle. What is needed is a way to get the RKE system in the vehicle to recognize the new keyless entry transmitter without requiring the services of a professional installer or the purchase of special test equipment.

### SUMMARY OF THE INVENTION

The invention relates to an in-vehicle communication module for operating a keyless entry receiver in a vehicle to recognize a previously unrecognized keyless entry transmitter according to claim 1. The module comprises a connector configured to make electrical contact with a diagnostic bus of the vehicle and, a processor configured to communicate with the diagnostic bus to determine a vehicle identity and , a transceiver configured to communicate with an internet server to download programming data corresponding to the vehicle identity. The processor further configured to operate the keyless entry receiver into a learn mode via the diagnostic bus and in accordance with the programming data and, a keyless entry transmitter operable to transmit a keyless entry signal effective for the keyless entry receiver to recognize the keyless entry transmitter. Also, the keyless entry transmitter is programmed in accordance with the programming data to transmit a keyless entry signal corresponding to a key-fob profile.More specifically, the transceiver is a cellular network transceiver.

Furthermore, the programming data includes transmitting frequency and signal encryption settings for the keyless entry transmitter that correspond to the vehicle identity.

Also, the keyless entry transmitter may be integrated within the in-vehicle communication module.

The invention is also relative to a communication system for operating a keyless entry receiver in a vehicle to recognize a previously unrecognized keyless entry transmitter according to claim 5. The system comprises an internet server configured to store programming data for operating the keyless entry receiver to recognize the keyless entry transmitter and, an in-vehicle communication module as described in the previous paragraphs. The keyless entry transmitter is programmed in accordance with the programming data to transmit a keyless entry signal corresponding to a key-fob profile.

The system may further comprise a mobile communication device configured to communicate with the in-vehicle communication module via the internet server effective to operate the keyless entry receiver to recognize the keyless entry transmitter.

The internet server is further configured to store a key-fob profile, and the mobile communication device is configured to download the key-fob profile and emulate a keyless entry key-fob based on the key-fob profile.

The programming data includes the key-fob profile so the keyless transmitter is programmed to transmit a keyless entry signal corresponding to the key-fob profile.

The invention further relates to a method for operating a keyless entry receiver in a vehicle to recognize a previously unrecognized keyless entry transmitter according to claim 9. The method comprises the following steps:
determining a vehicle identity of the vehicle via a diagnostic bus of the vehicle;
downloading programming data corresponding to the vehicle identity into an in-vehicle communication module;
operating the keyless entry receiver into a learn mode via a diagnostic bus of the vehicle and in accordance with the programming data; and
transmitting a keyless entry signal effective for the keyless entry receiver to recognize the keyless entry transmitter wherein the keyless entry transmitter is programmed in accordance with the programming data to transmit a keyless entry signal corresponding to a key-fob profile;
selecting a key-fob profile;
downloading the key-fob profile into the in-vehicle communication module; and
transmitting a keyless entry signal (22) corresponding to the key-fob profile.

Furthermore, the step of selecting a key-fob profile is performed by a mobile communication device in communication with an internet server. The step of determining a vehicle identity is initiated by a mobile communication device communicating with the in-vehicle communication module.

In said method, the mobile communication device and the in-vehicle communication module communicate via an internet server.

The method further comprises selecting a key-fob profile; downloading the key-fob profile into a mobile communication device and, emulating a keyless entry key-fob with the mobile communication device based on the key-fob profile.

### BRIEF DESCRIPTION OF DRAWINGS

The present invention will now be described, by way of example with reference to the accompanying drawings, in which:
Fig. 1 is a diagram of a communication system in accordance with one embodiment;
Fig. 2 is a diagram of a communication system in accordance with one embodiment; and
Fig. 3 is a flowchart for operating a communication system in accordance with one embodiment.

### DESCRIPTION OF THE PREFERRED EMBODIMENTS

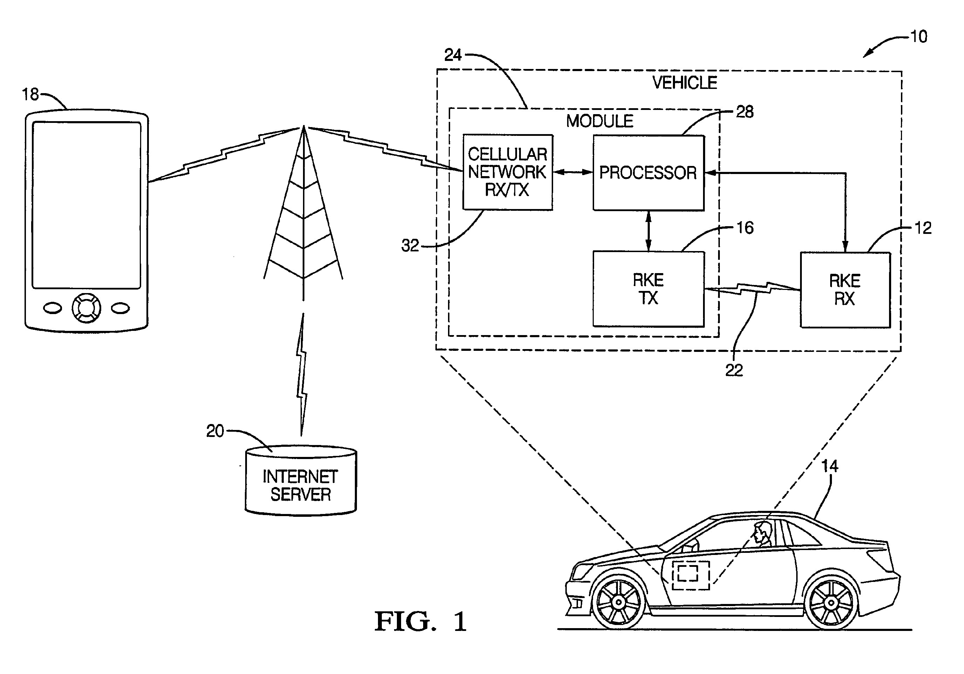

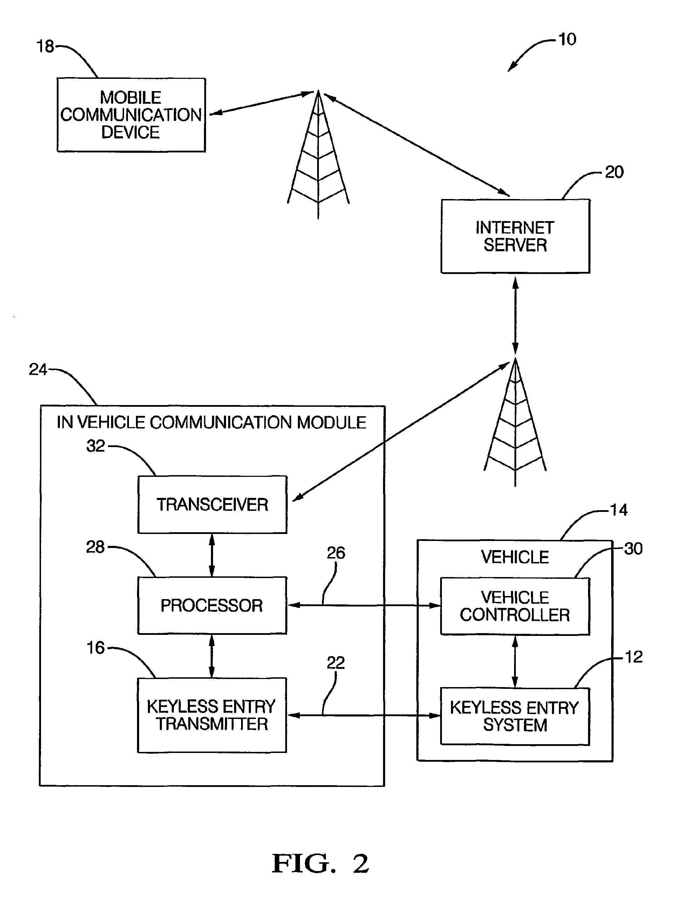

Figs. 1 and 2 illustrate non-limiting examples of a communication system 10 for operating a keyless entry receiver 12 in a vehicle 14 to recognize a keyless entry transmitter 16. In general, the communication system 10 provides a means for a mobile communication device 18, such as a smart phone, tablet, or personal computer, to send remote keyless entry (RKE) like command signals so remote keyless entry actions such as unlocking the vehicle doors or starting the vehicle engine can be executed by entering commands into the mobile communication device 18. In particular, the description set forth herein is directed to the process by which the keyless entry receiver 12 is programmed to accept signals from the keyless entry transmitter 16.

The communication system 10 includes an internet server 20 configured to store programming data for operating the keyless entry receiver 12 in order to recognize the keyless entry transmitter 16. The programming data includes a sequence of codes or software steps that when delivered to the keyless entry receiver 12 puts the keyless entry receiver 12 into a 'learn' mode of operation. The programming data also includes a key-fob profile so the keyless entry transmitter transmits a keyless entry signal 22 with the proper transmitting frequency and/or a signal encryption setting that the keyless entry receiver 12 can decode so the proper RKE system action is carried out. In other words, the keyless entry transmitter 16 is programmed in accordance with the programming data to transmit a keyless entry signal 22 corresponding to a key-fob profile.

The programming data to operate the keyless entry receiver 12 to the learn mode, or to configure or program the keyless entry transmitter 16 may be entered by, for example, connecting to a personal computer. The communication system includes an in-vehicle communication module 24 configured to communicate with a diagnostic bus 26 of the vehicle 14 to determine a vehicle identity. The diagnostic bus may be, for example, an On-Board-Diagnostics type 2 bus (OBDII) or may be an Assembly Line Diagnostic Link (ALDL). As such, the in-vehicle communication module 24 included a connector (not shown) sized and shaped to make electrical contact with the diagnostic bus 26 of the vehicle 14. The vehicle identity is in the form of a vehicle identification number (VIN) unique to each vehicle, or may be in the form of manufacturer, model, year of manufacturer type information. Whatever the form, the vehicle identity is used to determine what programming data is needed to operate the keyless entry receiver 12 and configure the keyless entry transmitter 16.

The in-vehicle communication module 24 includes a processor 28. The processor 28 includes a microprocessor or other control circuitry as should be evident to those in the art. The processor 28 includes memory, such as electrically erasable programmable read-only memory (EEPROM) for storing one or more routines, thresholds or captured data. The one or more routines is executed for processing signals received by the processor 28 as described herein. Fig. 1 illustrates that the processor 28 is in direct communication with the keyless entry receiver 12 via the diagnostic bus 26. Alternatively, as illustrated in Fig. 2, the processor 28 s with a vehicle controller 30, such as an engine control module (ECM), or a body control module (BCM), or other controller capable of communicating with the keyless entry receiver 12.

The in-vehicle communication module 24 includes a transceiver 32 configured to communicate with an internet server 20 to download programming data corresponding to the vehicle identity. The transceiver 32 is a cellular network type transceiver as are found in cellular phones, or it may be a Wi-Fi type transceiver as is found in many personal computers. The transceiver 32 advantageously communicates with the internet server to download programming data corresponding to the vehicle identity so the person installing the in-vehicle communication module 24 is not burdened with the task of manually entering programming data into the in-vehicle communication module 24 and risking entering incorrect programming data. Once the in-vehicle communication module 24 determines the vehicle identity and downloads the appropriate programming date, the in-vehicle communication module 24 is prepared to operate the keyless entry receiver 12 into a learn mode via the diagnostic bus 26 and in accordance with the programming data. The in-vehicle communication module 24 also prepares to operate the keyless entry transmitter 16 to transmit a keyless entry signal 22 effective for the keyless entry receiver 12 to recognize the keyless entry transmitter 16.

In one embodiment, the keyless entry transmitter 16 is integrated within the in-vehicle communication module. Alternatively, the keyless entry transmitter 16 is removable so that the keyless entry transmitter 16 could be used in the same manner as a key-fob. It is recognized that if the keyless entry transmitter 16 is removed from the vehicle 14 by a distance greater than the transmitting range of the keyless entry transmitter 16, the communication system 10 will not be able to, for example, open the vehicle door or start the vehicle engine by way of entering commands into the mobile communication device 18.

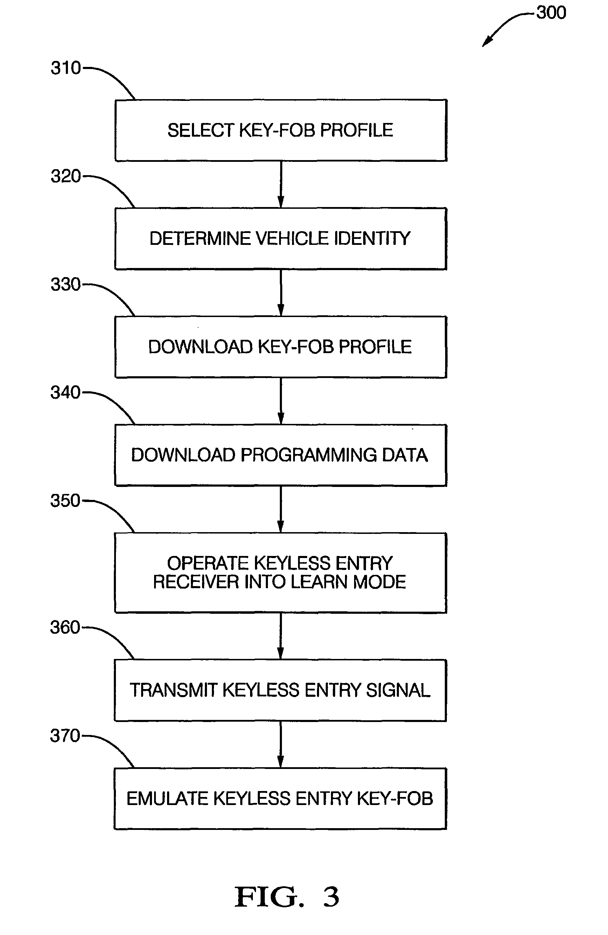

Fig. 3 illustrates a non-limiting example of a method 300 for operating a keyless entry receiver in a vehicle to recognize a keyless entry transmitter.

Step 310, SELECT KEY-FOB PROFILE, may include selecting a key-fob profile using a mobile communication device 18 in communication with an internet server 20. The key-fob profile may include data that determines how the display of the mobile communication device 18 will appear when the mobile communication device 18 is being used to send remote keyless entry commands

Step 320, DETERMINE VEHICLE IDENTITY, may include determining a vehicle identity of the vehicle via a diagnostic bus of the vehicle. This step may be initiated by the mobile communication device 18 communicating with the in-vehicle communication module 24.

Step 330, DOWNLOAD KEY-FOB PROFILE, may include downloading the key-fob profile into the mobile communication device 18 from the internet server 20

Step 340, DOWNLOAD PROGRAMMING DATA, may include downloading programming data corresponding to the vehicle identity into the in-vehicle communication module 24 and/or downloading the key-fob profile into the in-vehicle communication module 24.

Step 350, OPERATE KEYLESS ENTRY RECEIVER INTO LEARN MODE, may include operating the keyless entry receiver 12 into a learn mode via the diagnostic bus 26 of the vehicle 14 and in accordance with the programming data.

Step 360, TRANSMIT KEYLESS ENTRY SIGNAL, may include transmitting a keyless entry signal 22 effective for the keyless entry receiver 12 to recognize the keyless entry transmitter 16 and/or transmitting a keyless entry signal 22 corresponding to the key-fob profile.

Step 370, EMULATE KEYLESS ENTRY KEY-FOB, may include the mobile communication device 18 and the in-vehicle communication module 24 communicating via an internet server 20. As such, the mobile communication device 18 may emulate the appearance and/or features of a keyless entry key-fob based on the key-fob profile

In general, the operation of the communication system 10 when installing an unrecognized keyless entry transmitter may be characterized as process steps where the communication system 10: A) obtains necessary programming data from the internet server 20, B) programs the keyless entry transmitter 16, C) places a vehicle in keyless entry receiver 12 into a "learn" mode, and D) causes keyless entry receiver 12 to learn a new keyless entry transmitter, for example the keyless entry transmitter 16.

The following is only for the purpose of further explanation and not limitation. Upon installation and powering-up of the in-vehicle communication module 24 while connected to the diagnostic bus 26, the vehicle's unique VIN is read from the diagnostic bus 26 in order to identify the vehicle 14, i.e. - determine a vehicle identity. A user input and display device (e.g. smart phone, tablet, PC) may be connected to the in-vehicle communication module 24 directly or communication may be established via a cloud datacenter or internet server 20 to provide progress information and request input from the installer at appropriate times. requests the correct keyless entry programming data for the identified vehicle. The cloud datacenter may respond with all potential key-fob choices which may be available for the particular vehicle and presents those choices to the installer. The installer may choose the correct key-fob profile for the vehicle and the correct programming data for the key-fob profile is downloaded to the in-vehicle communication module 24. The in-vehicle communication module 24 may operate in order to put the keyless entry transmitter 16 into a programming mode to configure the transmitter for the particular vehicle.

Upon completion of programming the keyless entry transmitter 16, the in-vehicle communication module 24 commands the vehicle to enter the keyless entry receiver 12 into a learn mode and the keyless entry transmitter 16 into a programming mode using specific commands sent over the diagnostic bus 26. The specific procedures appropriate for the particular vehicle are followed, which would typically be for the in-vehicle communication module 24 to command the keyless entry transmitter 16 to broadcast certain RF commands or signals to the vehicle's keyless entry receiver 12 while it is in the learn mode. Upon completion of learn mode, the communication system 10 would be returned to a normal operational state and the in-vehicle communication module 24 and vehicle remote extension system could be tested for proper operation.

Accordingly, a communication system 10, an in-vehicle communication module 24 for the communication system 10 and a method 300 of operating a keyless entry receiver in a vehicle to recognize a keyless entry transmitter is provided. This provides a simple and convenient way for a vehicle owner to purchase an in-vehicle communication module 24, install that module into the owners vehicle by way of plugging it into a port or connector for the diagnostic bus 26, and then using a smart phone so the vehicle's remote keyless entry system can learn or recognize the keyless entry transmitter associated with the in-vehicle communication module 24. As such, the vehicle owner can set up to use his/her smart phone to send keyless entry commands to the vehicle via a cellular phone network and so extend the range that remote keyless entry commands can be sent to any distance when cellular phone or Wi-Fi communications are available to the mobile communication device 18 (smart phone) and the vehicle 14.

While this invention has been described in terms of the preferred embodiments thereof, it is not intended to be so limited, but rather only to the extent set forth in the claims that follow.

## Claims

1. An in-vehicle communication module (24) for operating a keyless entry receiver (12) in a vehicle (14) to recognize a previously unrecognized keyless entry transmitter (16), said module comprising:
a connector configured to make electrical contact with a diagnostic bus (26) of the vehicle (14);
a processor (28) configured to communicate with the diagnostic bus (26) to determine a vehicle identity;
a transceiver (32) configured to communicate with an internet server (20) to download programming data corresponding to the vehicle identity;
said processor (28) further configured to operate the keyless entry receiver (12) into a learn mode via the diagnostic bus (26) and in accordance with the programming data and,
a keyless entry transmitter (16) operable to transmit a keyless entry signal (22) effective for the keyless entry receiver (12) to recognize the keyless entry transmitter (16)wherein the keyless entry transmitter is programmed in accordance with the programming data to transmit the keyless entry signal (22) corresponding to a key-fob profile.

2. The in-vehicle communication module (24) in accordance with claim 1, wherein the transceiver (32) is a cellular network transceiver (32).

3. The module in accordance with claim 1, wherein the programming data includes transmitting frequency and signal encryption settings for the keyless entry transmitter (16) that correspond to the vehicle identity.

4. The module in accordance with claim 1, wherein the keyless entry transmitter (16) is integrated within the in-vehicle communication module (24).

5. A communication system (10) for operating a keyless entry receiver (12) in a vehicle (14) to recognize a previously unrecognized keyless entry transmitter (16), said system comprising:
an internet server (20) configured to store programming data for operating the keyless entry receiver (12) to recognize the previously unrecognized keyless entry transmitter (16); and
an in-vehicle communication module as set in any of the preceding claim; wherein the previously unrecognized keyless entry transmitter of said in-vehicle module is programmed in accordance with the programming data to transmit the keyless entry signal (22) corresponding to a key-fob profile.

6. The system in accordance with claim 5, further comprising a mobile communication device (18) configured to communicate with the in-vehicle communication module via the internet server (20) effective to operate the keyless entry receiver (12) to recognize the keyless entry transmitter (16).

7. The system in accordance with claim 6, wherein the internet server (20) is further configured to store a key-fob profile, and the mobile communication device (18) is configured to download the key-fob profile and emulate a keyless entry key-fob based on the key-fob profile

8. The system in accordance with claim 7, wherein the programming data includes the key-fob profile so the keyless transmitter is programmed to transmit a keyless entry signal (22) corresponding to the key-fob profile.

9. A method (300) for operating a keyless entry receiver (12) in a vehicle (14) to recognize a previously unrecognized keyless entry transmitter (16), said method (300) comprising:
determining a vehicle identity of the vehicle (14) via a diagnostic bus (26) of the vehicle (14);
downloading programming data corresponding to the vehicle identity into an in-vehicle communication module (24);
operating the keyless entry receiver (12) into a learn mode via a diagnostic bus (26) of the vehicle (14) and in accordance with the programming data; and
transmitting a keyless entry signal (22) effective for the keyless entry receiver (12) to recognize the previously unrecognized keyless entry transmitter (16); wherein the previously unrecognized keyless entry transmitter of said in-vehicle module is programmed in accordance with the programming data to transmit the keyless entry signal (22) corresponding to a key-fob profile.

10. The method (300) in accordance with claim 9, further comprising selecting a key-fob profile; downloading the key-fob profile into the in-vehicle communication module (24); and transmitting a keyless entry signal (22) corresponding to the key-fob profile.

11. The method (300) in accordance with claim 10, wherein the step (310) of selecting a key-fob profile is performed by a mobile communication device (18) in communication with an internet server (20).

12. The method (300) in accordance with claim 9, wherein the step (310) of determining a vehicle identity is initiated by a mobile communication device (18) communicating with the in-vehicle (14) communication module (24).

13. The method (300) in accordance with claim 12, wherein the mobile communication device (18) and the in-vehicle (14) communication module (24) communicate via an internet server (20).

14. The method (300) in accordance with claim 9, further comprising selecting a key-fob profile;
downloading the key-fob profile into a mobile communication device (18); and
emulating a keyless entry key-fob with the mobile communication device (18) based on the key-fob profile.

## Patentansprüche

1. Ein Fahrzeug-internes Kommunikationsmodul (24) zum Betreiben eines "schlüsselloser Zugang"-Empfängers (12) in einem Fahrzeug (14), um einen zuvor nicht-erkannten "schlüsselloser Zugang"-Sender (16) zu erkennen, wobei das Modul aufweist:
einen Verbinder, der konfiguriert ist zum Herstellen eines elektrischen Kontakts mit einem Diagnose-Bus (26) des Fahrzeugs (14);
einen Prozessor (28), der konfiguriert ist zum Kommunizieren mit dem Diagnose-Bus (26), um eine Fahrzeugidentität zu bestimmen;
einen Transceiver (32), der konfiguriert ist zum Kommunizieren mit einem Internetserver (20), um Programmierdaten entsprechend der Fahrzeugidentität herunterzuladen;
wobei der Prozessor (28) weiter konfiguriert ist zum Betreiben des "schlüsselloser Zugang"-Empfängers (12) in einen Lernmodus über den Diagnose-Bus (26) und in Übereinstimmung mit den Programmierdaten, und
einen "schlüsselloser Zugang"-Sender (16), der betriebsfähig ist zum Senden eines "schlüsselloser Zugang"-Signals (22) mit Wirkung für den "schlüsselloser Zugang"-Empfänger (12), um den "schlüsselloser Zugang"-Sender (16) zu erkennen, wobei der "schlüsselloser Zugang"-Sender in Übereinstimmung mit den Programmierdaten programmiert ist zum Senden des "schlüsselloser Zugang"-Signals (22) entsprechend einem Schlüsselanhängerprofil.

2. Das Fahrzeug-interne Kommunikationsmodul (24) gemäß Anspruch 1, wobei der Transceiver (32) ein "zellulares Netzwerk"-Transceiver (32) ist.

3. Das Modul gemäß Anspruch 1, wobei die Programmierdaten Sendefrequenz- und Signalverschlüsselungseinstellungen für den "schlüsselloser Zugang"-Sender (16) umfassen, die der Fahrzeugidentität entsprechen.

4. Das Modul gemäß Anspruch 1, wobei das "schlüsselloser Zugang"-Sender (16) in dem Fahrzeug-internen Kommunikationsmodul (24) integriert ist.

5. Ein Kommunikationssystem (10) zum Betreiben eines "schlüsselloser Zugang"-Empfängers (12) in einem Fahrzeug (14), um einen zuvor nicht-erkannten "schlüsselloser Zugang"-Sender (16) zu erkennen, wobei das System aufweist:
einen Internetserver (20), der konfiguriert ist zum Speichern von Programmierdaten zum Betreiben des "schlüsselloser Zugang"-Empfängers (12), um den zuvor nicht-erkannten "schlüsselloser Zugang"-Sender (16) zu erkennen; und
ein Fahrzeug-internes Kommunikationsmodul gemäß einem der vorhergehenden Ansprüche; wobei der zuvor nicht-erkannte "schlüsselloser Zugang"-Sender des Fahrzeug-internen Moduls in Übereinstimmung mit den Programmierdaten programmiert ist zum Senden des "schlüsselloser Zugang"-Signals (22) entsprechend einem Schlüsselanhängerprofil.

6. Das System gemäß Anspruch 5, das weiter eine mobile Kommunikationsvorrichtung (18) aufweist, die konfiguriert ist zum Kommunizieren mit dem Fahrzeug-internen Kommunikationsmodul über den Internetserver (20) mit Wirkung zum Betreiben des "schlüsselloser Zugang"-Empfängers (12), um den "schlüsselloser Zugang"-Sender (16) zu erkennen.

7. Das System gemäß Anspruch 6, wobei der Internetserver (20) weiter konfiguriert ist zum Speichern eines Schlüsselanhängerprofils, und die mobile Kommunikationsvorrichtung (18) konfiguriert ist zum Herunterladen des Schlüsselanhängerprofils und Emulieren eines "schlüsselloser Zugang"-Schlüsselanhängers basierend auf dem Schlüsselanhängerprofil.

8. Das System gemäß Anspruch 7, wobei die Programmierdaten das Schlüsselanhängerprofil umfassen, so dass der schlüssellose Sender programmiert ist zum Senden eines "schlüsselloser Zugang"-Signals (22) entsprechend dem Schlüsselanhängerprofil.

9. Ein Verfahren (300) zum Betreiben eines "schlüsselloser Zugang"-Empfängers (12) in einem Fahrzeug (14), um einen zuvor nicht-erkannten "schlüsselloser Zugang"-Sender (16) zu erkennen, wobei das Verfahren (300) aufweist:
Bestimmen einer Fahrzeugidentität des Fahrzeugs (14) über einen Diagnose-Bus (26) des Fahrzeugs (14);
Herunterladen von Programmierdaten entsprechend der Fahrzeugidentität in ein Fahrzeug-internes Kommunikationsmodul (24);
Betreiben des "schlüsselloser Zugang"-Empfängers (12) in einen Lernmodus über einen Diagnose-Bus (26) des Fahrzeugs (14) und in Übereinstimmung mit den Programmierdaten; und
Senden eines "schlüsselloser Zugang"-Signals (22) mit Wirkung für den "schlüsselloser Zugang"-Empfänger (12), um den zuvor nicht-erkannten "schlüsselloser Zugang"-Sender (16) zu erkennen; wobei der zuvor nicht-erkannte "schlüsselloser Zugang"-Sender des Fahrzeug-internen Moduls in Übereinstimmung mit den Programmierdaten programmiert ist zum Senden des "schlüsselloser Zugang"-Signals (22) entsprechend einem Schlüsselanhängerprofil.

10. Das Verfahren (300) gemäß Anspruch 9, das weiter aufweist ein Auswählen eines Schlüsselanhängerprofils; Herunterladen der Schlüsselanhängerprofils in das Fahrzeug-interne Kommunikationsmodul (24); und Senden eines "schlüsselloser Zugang"-Signals (22) entsprechend dem Schlüsselanhängerprofil.

11. Das Verfahren (300) gemäß Anspruch 10, wobei der Schritt (310) des Auswählens eines Schlüsselanhängerprofils durch eine mobile Kommunikationsvorrichtung (18) in Kommunikation mit einem Internetserver (20) durchgeführt wird.

12. Das Verfahren (300) gemäß Anspruch 9, wobei der Schritt (310) des Bestimmens einer Fahrzeugidentität durch eine mobile Kommunikationsvorrichtung (18) initiiert wird, die mit dem Fahrzeug-internen (14) Kommunikationsmodul (24) kommuniziert.

13. Das Verfahren (300) gemäß Anspruch 12, wobei die mobile Kommunikationsvorrichtung (18) und das Fahrzeug-interne (14) Kommunikationsmodul (24) über einen Internetserver (20) kommunizieren.

14. Das Verfahren (300) gemäß Anspruch 9, das weiter aufweist ein Auswählen eines Schlüsselanhängerprofils;
Herunterladen des Schlüsselanhängerprofils in eine mobile Kommunikationsvorrichtung (18); und
Emulieren eines "schlüsselloser Zugang"-Schlüsselanhängers mit der mobilen Kommunikationsvorrichtung (18) basierend auf dem Schlüsselanhängerprofil.

## Revendications

1. Module de communication embarqué sur véhicule (24) pour le fonctionnement d'un récepteur d'entrée sans clé (12) dans un véhicule (14) afin de reconnaître un émetteur d'entrée sans clé (16) précédemment non reconnu, ledit module comprenant :
un connecteur configuré pour établir un contact électrique avec un bus de diagnostic (26) du véhicule (14) ;
un processeur (28) configuré pour communiquer avec le bus de diagnostic (26) pour déterminer une identité du véhicule ;
un émetteur/récepteur (32) configuré pour communiquer avec un serveur Internet (20) pour télécharger des données de programmation correspondant à l'identité du véhicule ;
ledit processeur (28) étant en outre configuré pour faire fonctionner le récepteur d'entrée sans clé (12) dans un mode d'apprentissage via le bus de diagnostic (26) et en accord avec les données de programmation, et
un émetteur d'entrée sans clé (16) dont la fonction est d'émettre un signal d'entrée sans clé (22) effectif pour que le récepteur d'entrée sans clé (12) reconnaisse l'émetteur d'entrée sans clé (16), dans lequel l'émetteur d'entrée sans clé est programmé en accord avec les données de programmation pour émettre le signal d'entrée sans clé (22) correspondant à un profil dit "key-fob" (porte-clés à télécommande).

2. Module de communication embarqué sur véhicule (24) selon la revendication 1, dans lequel l'émetteur/récepteur (32) est un émetteur/récepteur de réseau cellulaire (32).

3. Module de communication selon la revendication 1, dans lequel les données de programmation incluent une fréquence d'émission et des réglages de cryptage de signal pour l'émetteur d'entrée sans clé (16) qui correspond à l'identité du véhicule.

4. Module selon la revendication 1, dans lequel l'émetteur d'entrée sans clé (16) est intégré à l'intérieur du module de communication embarqué sur véhicule (24).

5. Système de communication (10) pour le fonctionnement d'un récepteur d'entrée sans clé (12) dans un véhicule (14) pour reconnaître un émetteur d'entrée sans clé (16) précédemment non reconnu, ledit système comprenant :
un serveur Internet (20) configuré pour stocker des données de programmation pour le fonctionnement du récepteur d'entrée sans clé (12) afin de reconnaître l'émetteur d'entrée sans clé (16) précédemment non reconnu ; et
un module de communication embarqué sur véhicule selon l'une quelconque des revendications précédentes ; dans lequel l'émetteur d'entrée sans clé précédemment non reconnu dudit module embarqué sur véhicule est programmé en accord avec les données de programmation pour émettre le signal d'entrée sans clé (22) correspondant à un profil dit "key-fob" (porte-clés à télécommande).

6. Système selon la revendication 5, comprenant en outre un dispositif de communication mobile (18) configuré pour communiquer avec le module de communication embarqué sur véhicule via le serveur Internet (20) et effectif pour faire fonctionner le récepteur d'entrée sans clé (12) pour reconnaître l'émetteur d'entrée sans clé (16).

7. Système selon la revendication 6, dans lequel le serveur Internet (20) est en outre configuré pour stocker un profil de porte-clés à télécommande, et le dispositif de communication mobile (18) est configuré pour télécharger le profil de porte-clés à télécommande et émuler un porte-clés à télécommande d'entrée sans clé sur la base du profil de porte-clés à télécommande.

8. Système selon la revendication 7, dans lequel les données de programmation incluent le profil de porte-clés à télécommande de telle façon que l'émetteur sans clé est programmé pour émettre un signal d'entrée sans clé (22) correspondant au profil de porte-clés à télécommande.

9. Procédé (300) pour le fonctionnement d'un récepteur d'entrée sans clé (12) dans un véhicule (14) afin de reconnaître un émetteur d'entrée sans clé (16) précédemment non reconnu, ledit procédé (300) comprenant les étapes consistant à :
déterminer une identité du véhicule (14) via un bus de diagnostic (26) du véhicule (14) ;
télécharger des données de programmation correspondant à l'identité du véhicule dans un module de communication embarqué sur véhicule (24) ;
faire fonctionner le récepteur d'entrée sans clé (12) dans un mode d'apprentissage via un bus de diagnostic (26) du véhicule (14) et en accord avec les données de programmation ; et
émettre un signal d'entrée sans clé (22) effectif pour que le récepteur d'entrée sans clé (12) reconnaisse l'émetteur d'entrée sans clé (16) précédemment non reconnu ; dans lequel l'émetteur d'entrée sans clé précédemment non reconnu dudit module embarqué sur véhicule est programmé en accord avec les données de programmation pour émettre le signal d'entrée sans clé (22) correspondant à un profil dit "key-fob" (porte-clés à télécommande).

10. Procédé (300) selon la revendication 9, comprenant en outre les étapes consistant à sélectionner un profil de porte-clés à télécommande, à télécharger le profil de porte-clés à télécommande dans le module de communication embarqué sur véhicule (24) ; et à émettre un signal d'entrée sans clé (22) correspondant au profil de porte-clés à télécommande.

11. Procédé (300) selon la revendication 10, dans lequel l'étape (310) consistant à sélectionner un profil de porte-clés à télécommande est exécutée par un dispositif de communication mobile (18) en communication avec un serveur Internet (20).

12. Procédé (300) selon la revendication 9, dans lequel l'étape (310) consistant à déterminer une identité du véhicule est initiée par un dispositif de communication mobile (18) communiquant avec le module de communication (24) embarqué sur véhicule (14).

13. Procédé (300) selon la revendication 12, dans lequel le dispositif de communication mobile (18) et le module de communication (24) embarqué sur véhicule (14) communiquent via un serveur Internet (20).

14. Procédé (300) selon la revendication 9, comprenant en outre les étapes consistant à sélectionner un profil de porte-clés à télécommande ;
télécharger le profil de porte-clés à télécommande dans un dispositif de communication mobile (18) ; et
émuler un porte-clés à télécommande d'entrée sans clé avec le dispositif de communication mobile (18) sur la base du profil de porte-clés à télécommande.
